# EUROPEAN PATENT SPECIFICATION

(11) **EP 2 308 583 B1**
(45) Date of publication and mention of the grant of the patent: **11.12.2013**
(21) Application number: 10010145.0
(22) Date of filing: 22.09.2010
(51) Int. Cl.: B01D 53/14, B01D 53/58, C02F 3/30, C02F 1/52, C02F 1/56

(54) **Scrubbing ammonia from air**
Auswaschen von Ammoniak aus Luft
ÉPURATION D'AMMONIAC À PARTIR DE l'AIR

(30) Priority: 23.09.2009 NL 1037313
(43) Date of publication of application: 13.04.2011
(73) Proprietor: INNO+ B.V., 5981 NB Panningen (NL)
(72) Inventor: Ortmans, Maurice Caspar Joseph Maria, 5993 GL Maasbree (NL)
(74) Representative: Altenburg, Bernardus Stephanus Franciscus

(56) References cited:
- EP-A1- 0 646 549
- EP-A1- 1 066 752
- WO-A1-95/34371
- GB-A- 901 975
- ROSTRON W M ET AL: "Nitrification of high strength ammonia wastewaters: comparative study of immobilisation media", WATER RESEARCH, ELSEVIER, AMSTERDAM, NL, vol. 35, no. 5, 1 April 2001 (2001-04-01), pages 1169-1178, XP004314793, ISSN: 0043-1354, DOI: DOI:10.1016/S0043-1354(00)00365-1

## Description

The present invention relates to a method for subjecting air that contains ammonia and needs to be purified to a scrubbing treatment, wherein the air to be purified is passed through a matrix, an aqueous liquid is introduced onto the matrix at a relatively high position and flows over the matrix, the aqueous liquid is collected at a relatively low position and is subjected to a reprocessing treatment to yield a reprocessed aqueous liquid that is used again for carrying out the scrubbing treatment of air that contains ammonia and needs to be purified, wherein at least part of the collected aqueous liquid is subjected to a nitrification treatment, and at least part of the liquid subjected to the nitrification treatment is used as the reprocessed aqueous liquid for carrying out again the scrubbing treatment of air that contains ammonia and needs to be purified.

Such a method is known in the art, for instance for purifying air from a stable as disclosed in EP1066752. The nitrification-reaction brings about the formation of acid, as a result of which the reprocessed liquid is better capable of removing ammonia from air. The formation of slime is slowed down to a large extent, therefore the matrix needs to be cleaned less often and the air to be purified is purified effectively for a longer period of time before the matrix optionally needs maintenance or has to be replaced. This comes with a substantial reduction of the cost, also because the flow resistance for air remains low for a longer period of time as a result of which the passing of air through the matrix requires less energy.

The object of the invention is to provide a method according to the preamble achieving a further reduction in cost.

To this end the invention according to the preamble is characterized in that in addition
a) a flocculating agent is added to at least part of the collected aqueous liquid;
b) the liquid obtained following the addition of the flocculating agent is subjected to a clearance step, and
the aqueous liquid obtained after clearance is used for carry-ing out the scrubbing treatment of air.

Thus, for the nitrifying bacteria less substrate other then ammonia is available. The nitrification treatment is preferably performed under such conditions that the pH of the reprocessed aqueous liquid is lowered to less than 7. With nitrification the formation of nitrate and or nitrite is meant. In the present application a matrix is understood to be a surface-enlarging structure that has a large number of passageways for allowing the passage of air to be purified, and also allows for water applied onto the structure to flow over the structure slowly and with an increased surface area, as a result of which a prolonged contact time between the water and air passed through is achieved. The matrix is for instance a plastic matrix. The matrix may be constituted by a series of parallel plates wherein the air flows along the plates. Matrices made up of a series of such plates are known in the art. In practice however usually a more complex structure will be chosen, such as a honeycomb structure. The air to be purified may be passed in cross-flow or in a counter-current flow with the water. A very important advantage of the method according to the present invention is that it allows to keep the total amount of washing liquid (aqueous liquid) limited and yet ammonia can be collected effectively. Keeping this volume limited has major cost advantages, both regarding investments and regarding the discharge of water from the system. The aqueous liquid obtained after clearance may for instance added to reprocessed liquid of the nitrification treatment or collected aqueous liquid. The aqueous liquid passed over the matrix will then result in even less formation of slime. In the present application a flocculating agent is understood to be a coagulant (such as aluminium chloride or hydrogen peroxide) or a flocculant (such as a polymer, eg. BM-Floc: supplier Breustedt Chemie BV Apeldoorn, The Netherlands). From a practical point of view flocculating agents will in general be added as a solution.

A preferred embodiment is characterized in that the nitrification treatment is performed by use of encapsulated microorganisms.

Such encapsulated microorganisms are very effective, and for instance those which are available commercially (Hartmann Wasserrecycling, Switzerland).

A preferred embodiment is characterized in that the air subjected to the scrubbing treatment is air from a stable.

This is an important use of the method according to the invention.

A preferred embodiment is characterized in that the flocculating agent is selected from the group consisting of ferric salts and an aluminium salt.

Such a flocculating agent has proved to be very effective in preventing the formation of slime on the matrix. Further, because of their acidic properties, the use of these flocculating agents can contribute to the effectiveness with which ammonia is scrubbed from the air.

A preferred embodiment is characterized in that the flocculating agent is selected from aluminium chloride and iron(III) sulphate.

With this very good results have been achieved wherein formation of slime fails to occur for a prolonged period.

A preferred embodiment is characterized in that aqueous liquid subjected to nitrification treatment is subjected to a denitrification treatment.

This step is performed anaerobically, such as in a bioreactor, and will in general also comprise supplying a substrate (such as sugar) to the denitrifying microorganisms. The resultant water may be discharged or passed over the matrix for scrubbing air that contains ammonia and needs to be purified.

A preferred embodiment is characterized in that sludge, formed following the addition of a flocculating agent to collected aqueous liquid, is used as a substrate for microorganisms to create anaerobic conditions promoting the denitrification.

The less oxygen resides, the more effective the denitrification will be performed. The collected aqueous liquid is aqueous liquid that already has or has not undergone any treatment, such as the nitrification treatment. The flocculated sludge may come from a separate settling trough or may remain in the bioreactor in which the denitrification is carried out because flocculating agent is added to water that has to be denitrified and is supplied to the bioreactor. Sludge contains organic matter that contributes to anaerobic conditions for the denitifrication. Thereby less substrate, such as sugar, needs to be added. Also in this way the sludge is depleted in organic matter and can be disposed of more cheaply.

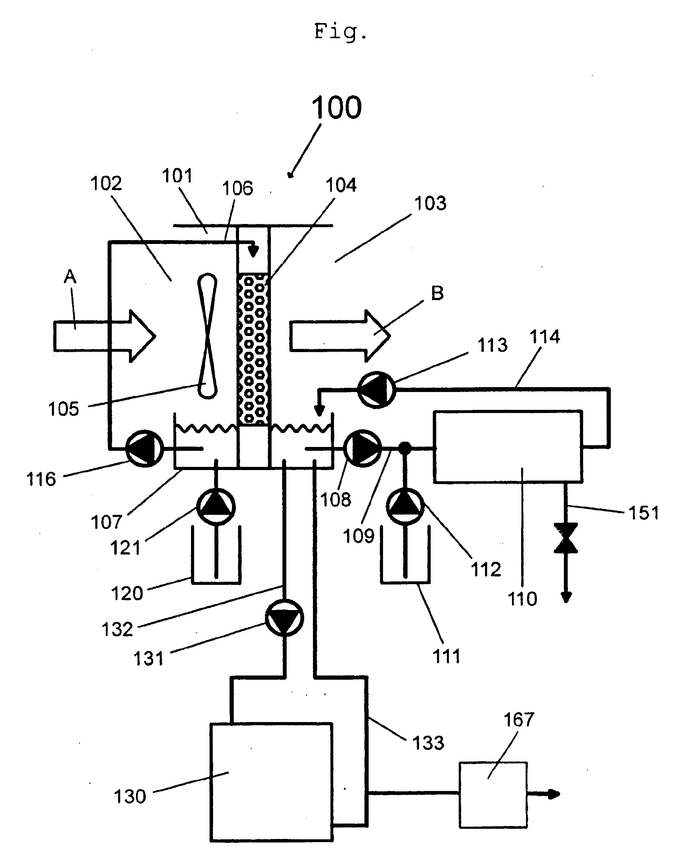

The present invention will now be illustrated with reference to the drawing, where the only figure represents an installation suitable for application of the method according to the invention.

An installation 100 suitable for applying the method according to the invention comprises a duct 101 having a inlet side 102 and an outlet side 103. In the duct 101 there is a matrix 104. Arrow A indicates the direction in which air to be purified is supplied to the matrix 104 and arrow B indicates the direction of air passed through the matrix 104. The matrix 104 may for instance be constituted by a series of parallel plates between which the air to be purified is passed. Preferably, however the matrix 104 is a three-dimensional structure which is known for this usage (type 2H NET or preferably type F-LKP 25-312-1200, 2H Kunststoff GmbH, Wettringen Germany). The air passed through the matrix 104 may be aspirated using a fan 105 (from the outlet side 103), but may also be blown in (from the inlet side 102) in which case the fan may also be part of the wall of eg. a stable or other space from which air that contains ammonia and needs to be purified is taken in.

Water is applied onto the matrix 104 supplied via a conduit 106 by means of pump 116. The water flows over the matrix 104 allowing it to take up ammonia, but also other contaminants such as dust, from the air to be purified.

Water that has flowed over the matrix 104 is collected in a collection reservoir 107. According to the invention, at least part of this water that has been passed over the matrix 104 is subjected to a treatment with a flocculating agent. To this end water from the collection reservoir 107 is pumped using a pump 108 via conduit 109 to a settling trough 110. Flocculating agent, here a concentrated solution of polyaluminiumchloride available under the tradename Sachtoklar (Breustedt chemie, Apeldoorn, The Netherlands) is introduced from a storage reservoir 111 by means of pump 112 into the conduit 109, where the flocculating agent is mixed with the water from the collection reservoir 107 before ending up in the settling trough 110. In the settling trough solid fractions will settle or float. By means of pump 113 cleared water is again introduced into the collection reservoir 107 via conduit 114, preferably right before the inlet of conduit 106. Alternatively, the cleared liquid may be introduced in the conduit 106, which will then take place before pump 116, which pump 116 serves to supply water to the matrix 104 via conduit 106. Sludge may be discharged via conduit 151.

Air to be purified originating from for instance a stable or a space with a biogas-installation contains ammonia. The water passed over the matrix 104 takes up the ammonia. According to the invention the ammonia is nitrified, causing the pH of the aqueous liquid to be lowered again and volatile ammonia is converted into nonvolatile nitrate and/or nitrite. Despite the circulating of the aqueous liquid, ammonia could hereby be collected more efficiently. To this end the installation is provided with a bioreacter 130, in which encapsulated bacteria carry out the nitrification. If so desired, additional oxygen, for instance in the form of air, may be added to the bioreactor 130 but in view of the costs thereof this is not preferred. The bioreactor 130 will in general be operated such that not all oxygen dissolved in the water is used up, and preferably - when the water exits the bioreactor 130 - the concentration of oxygen is still at least 2 mg/l. This can be achieved easily and inexpensively by clearing the water circulating in the system, as described above. *Thus*, *for the nitrifying bacteria less substrate other then ammonia is available*. Preferably, conduit 133 is therefore connected to conduit 109. Water can be introduced into the bioreactor 130 via a feed conduit 132 using a pump 131, and water biologically purified in the module 130 is then introduced into the storage tank 107 via discharge conduit 133 or will be, as stated, fed to the settling trough 110 via conduit 109. Returning at least part of the water originating from bioreactor 130 to the storage tank 107 makes that the composition of the water fluctuates less, which facilitates performing the method according to the invention. Part of the water originating from the bioreactor 130, for instance 1/20th, may be branched off and treated in a denitrification-bioreactor 167, wherein the aqueous liquid subsequently may for instance be drained away. In that case preferably flocculating agent is added as a result of which sludge will remain in the bioreactor 167. Also sludge originating from the settling trough 110 may be added to the bioreactor 167. The sludge contains organic matter that functions as a substrate for microorganisms, causing bioreactor 167 to become strongly anaerobic, and the denitrification will occur to a large extent. Carrying out nitrification treatment and denitrification treatment in a reactor is in itself well known in the art and needs no further elucidation. If the microorganisms carrying out nitrification and/or denitrification lack absorbable phosphor this may for instance be added to the circulated water in the form of phosphoric acid. Water for replenishment can be added to the system at any location.

## Claims

1. Method for subjecting air that contains ammonia and needs to be purified to a scrubbing treatment, wherein the air to be purified is passed through a matrix (104), an aqueous liquid is introduced onto the matrix (104) at a relatively high position and flows over the matrix (104), the aqueous liquid is collected at a relatively low position and is subjected to a reprocessing treatment to yield a reprocessed aqueous liquid that is used again for carrying out the scrubbing treatment of air that contains ammonia and needs to be purified, wherein at least part of the collected aqueous liquid is subjected to a nitrification treatment, and at least part of the liquid subjected to tne nitrification treatment is used as the reprocessed aqueous liquid for carrying out again the scrubbing treatment of air that contains ammonia and needs to be purified, **characterised in that** in addition
a) a flocculating agent is added to at least part of the collected aqueous liquid
b) the liquid obtained following the addition of the flocculating agent is subjected to a clearance step, and
the aqueous liquid obtained after clearance is used tor carry-ing out the scrubbing treatment of air.

2. A method according to claim 1, wherein the nitrification treatment is carried out using encapsulated microorganisms.

3. A method according to claim 1 or 2, wherein the air subjected to the scrubbing treatment is air from a stable.

4. The method according Lo any of the preceding claims, wherein the flocculating agent is selected from the group consisting of ferric salts and an aluminium salt.

5. The method according to any of the preceding claims wherein the flocculating agent is selected from aluminium chloride and iron (III) sulphate.

6. The method according to any of the preceding claims, wherein aqueous liquid subjected to nitrification treatment is subjected to a denitrification treatment.

7. A method according to claim 6, wherein sludge, formed following the addition of a flocculating agent to collected aqueous liquid, is used as a substrate for microorganisms to create anaerobic conditions promoting the denitrification.

## Patentansprüche

1. Verfahren zum Einbringen von Luft, welche Ammoniak enthält und gereinigt werden soll, in eine Auswaschung, wobei die Luft, die gereinigt werden soll durch eine Matrix (104) geführt wird, eine wässrige Flüssigkeit auf die Matrix (104) auf einer relativ betrachtet hohen Position aufgebracht wird und über die Matrix (104) fließt, die wässrige Flüssigkeit an einer relativ betrachtet niedrigen Position gesammelt wird und einer Wiederaufbereitung zugeführt wird um eine wiederaufbereitete wässrige Flüssigkeit zu erhalten, die wiederverwendet wird, um die Auswaschung von Luft, die Ammoniak enthält und gereinigt werden soll, durchzuführen, wobei wenigstens ein Teil der gesammelten wässrigen Flüssigkeit einer Nitrifikation zugeführt wird und zumindest ein Teil der Flüssigkeit, die der Nitrifikation zugeführt wurde, als wiederaufbereitete wässrige Flüssigkeit verwendet wird, um wieder die Auswaschung von Luft, welche Ammoniak enthält und gereinigt werden soll,
durchzuführen,
**dadurch gekennzeichnet, dass** zusätzlich
a) ein Flockungsmittel zu wenigstens einem Teil der gesammelten wässrigen Flüssigkeit zugegeben wird;
b) die durch Zugabe des Flockungsmittels erhaltene Flüssigkeit einen Klärungsschritt durchläuft und
die wässrige Flüssigkeit, die nach der Klärung erhalten wird verwendet wird um die Auswaschung von Luft durchzuführen.

2. Verfahren nach Anspruch 1, wobei die Nitrifikation durch die Verwendung von gekapselten Mikroorganismen durchgeführt wird.

3. Verfahren nach einem der Ansprüche 1 oder 2, wobei die Luft, die der Auswaschung zugeführt wird, Luft aus einem Stall ist.

4. Verfahren nach einem der vorhergehenden Ansprüche, wobei das Flockungsmittel ausgewählt wird aus einer Gruppe, bestehend aus Eisen(III)-Salzen und einem Aluminiumsalz.

5. Verfahren nach einem der vorhergehenden Ansprüche, wobei das Flockungsmittel ausgewählt wird aus Aluminiumchlorid und Eisen(III)-Sulfat.

6. Verfahren nach einem der vorhergehenden Ansprüche, wobei die wässrige Flüssigkeit, die der Nitrifikation unterzogen wird, einer Entstickung unterzogen wird.

7. Verfahren nach Anspruch 6, wobei der Schlamm, der durch die Zugabe des Flockungsmittels zu der gesammelten wässrigen Flüssigkeit entsteht, als Substrat für Mikroorganismen verwendet wird, um anaerobe Bedingungen, die die Entstickung begünstigen, zu erhalten.

## Revendications

1. Procédé pour soumettre de l'air, qui contient de l'ammoniac et doit être purifié, à un traitement d'épuration, dans lequel l'air à épurer est passé à travers une matrice (104), un liquide aqueux est introduit vers la matrice (104) en une position relativement élevée et s'écoule sur la matrice (104), le liquide aqueux est collecté en une position relativement basse et est soumis à un traitement de retraitement pour donner un liquide aqueux retraité qui est utilisé à nouveau pour mettre en oeuvre l'épuration de l'air qui contient de l'ammoniac et doit être purifié, au moins une partie du liquide aqueux recueilli étant soumise à un traitement de nitrification et au moins une partie du liquide soumise au traitement de nitrification étant utilisée comme liquide aqueux retraité pour mettre en oeuvre à nouveau le traitement d'épuration de l'air qui contient de l'ammoniac et doit être purifié, **caractérisé en ce que**, en outre
a) un agent floculant est ajouté à au moins une partie du liquide aqueux recueilli ;
b) le liquide obtenu à la suite de l'addition de l'agent floculant est soumis à une étape de dégagement, et
le liquide aqueux obtenu après le dégagement est utilisé pour la mise en oeuvre du traitement d'épuration de l'air.

2. Un procédé selon la revendication 1, dans lequel le traitement de nitrification est mis en oeuvre en utilisant des micro-organismes encapsulés.

3. Un procédé selon la revendication 1 ou la revendication 2, dans lequel l'air soumis au traitement d'épuration est de l'air provenant d'une écurie.

4. Le procédé selon l'une quelconque des revendications précédentes, dans lequel l'agent floculant est choisi dans le groupe comprenant les sels ferriques et un sel d'aluminium.

5. Le procédé selon l'une quelconque des revendications précédentes, dans lequel l'agent de floculation est choisi parmi le chlorure d'aluminium et le sulfate de fer (III).

6. Le procédé selon l'une quelconque des revendications précédentes, dans lequel le liquide aqueux soumis à un traitement de nitrification est soumis à un traitement de dénitrification.

7. Un procédé selon la revendication 6, dans lequel de la boue, formée à la suite de l'ajout d'un agent floculant au liquide aqueux recueilli, est utilisée comme substrat pour des micro-organismes afin de créer des conditions anaérobies favorisant la dénitrification.
